# EUROPÄISCHE PATENTSCHRIFT

(11) **EP 1 321 020 B1**
(45) Veröffentlichungstag und Bekanntmachung des Hinweises auf die Patenterteilung: **02.11.2006**
(21) Anmeldenummer: 02102729.7
(22) Anmeldetag: 11.12.2002
(51) Int. Cl.: A01C 7/04

(54) **Sämaschine mit einer schwenkbar befestigten Pflanzeinheit**
Sowing machine with pivotably mounted planting unit
Semoir avec une unité de plantation montée pivotante

(30) Priorität: 18.12.2001 US 21582
(43) Veröffentlichungstag der Anmeldung: 25.06.2003
(73) Patentinhaber: DEERE & COMPANY, Moline, Illinois 61265-8098 (US)
(72) Erfinder: Hagen, Matthew, Brian, Bettendorf, IA 52722 (US); Lodico, James, Irwin, Hampton, IL 61256 (US)
(74) Vertreter: Holst, Sönke

(56) Entgegenhaltungen:
- EP-A- 0 620 963
- US-A- 4 616 577
- US-A- 5 325 800
- US-B1- 6 308 646

## Beschreibung

Die Erfindung betrifft eine Sämaschine mit einem Rahmen und einer schwenkbar am Rahmen befestigten Pflanzeinheit, die eine horizontale Arbeitsposition und eine vertikale Transportposition hat und mit einem Behälter und einem Messsystem zum Abmessen von Saatgut ausgestattet ist, wobei am Rahmen ein Hauptsaatgutbehälter befestigt ist und zwischen dem Hauptsaatgutbehälter und dem Behälter der Pflanzeinheit eine Verbindung zum Überführen von Saatgut aus dem Hauptsaatgutbehälter zum Behälter der Pflanzeinheit angeordnet ist.

Reihenpflanzgeräte sind Sämaschinen, die zum Pflanzen in Reihen angebauter Pflanzen verwendet werden. Typischerweise werden Reihenpflanzgeräte mit einer Anzahl an Pflanzeinheiten ausgestattet. Jede Pflanzeinheit umfasst einen Saatgutbehälter, ein Messsystem, einen Furchenöffner mit Tiefeneinstellrädern, Schließräder und ein Saatgutrohr. Der Saatgutbehälter führt dem Messsystem Saatgut zu. Das Messsystem misst wiederum das Saatgut ab und gibt das zugemessene Saatgut in das Saatgutrohr ab. Der Furchenöffner mit Tiefeneinstellrädern formt eine Pflanzfurche mit der richtigen Tiefe. Das abgemessene Saatgut wird durch das Saatgutrohr in die Pflanzfurche abgegeben. Die Pflanzfurche wird durch Schließräder geschlossen, die das Saatgut in der Pflanzfurche einschließen.

Messsysteme können mechanischen oder pneumatischen Typs sein. Pneumatische Messsysteme umfassen Vakuummesssysteme, in denen ein Unterdruck oder Vakuum verwendet wird, Saatgut an eine Saatgutscheibe zu saugen, und Systeme mit Überdruck. Ein Messsystem mechanischen Typs ist in der US 5 720 233 A offenbart und ein Messsystem des Vakuumtyps ist in der US 4 836 412 A offenbart.

Den Einheiten zugeordnete Behälter an Pflanzeinheiten wurden bereits von einem Hauptbehälter mit Saatgut versorgt. Ein Beispiel eines derartigen Systems ist in der US 5 392 722 A offenbart.

Es ist außerdem bekannt, ein Messsystem abzudichten, während es von einer Arbeitsposition in eine Transportposition bewegt wird. Ein Beispiel dafür ist in der US 5 325 800 A offenbart.

Es ist auch bekannt, Pflanzeinheiten an ihren Nasen vertikal von einer horizontalen Arbeitsposition in eine vertikale Transportposition zu verschwenken.

Die der Erfindung zu Grunde liegende Aufgabe wird darin gesehen, ein verbessertes Messsystem bereitzustellen, bei dem das Saatgut in der Pflanzeinheit verbleibt, wenn sie in ihre Transportposition verschwenkt wird.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Pflanzeinheit umfasst einen ihr zugeordneten Behälter und ein Messsystem. Das Saatgut wird durch das Messsystem abgemessen, bevor es in ein Saatgutrohr und in eine Pflanzfurche abgegeben wird. Dabei bildet sich ein Saatguthügel im Messsystem. Es wird eine Leitwand vorgeschlagen, die den Saatguthügel im Messsystem hinreichend tief hält, so dass das Saatgut aus der Innenseite des Messsystems über die Leitwand in den Behälter der Pflanzeinheit fließt, wenn die Pflanzeinheit aus ihrer horizontalen Arbeitsposition in die vertikale Transportposition verschwenkt wird. Wenn die Pflanzeinheit in ihre horizontale Position abgesenkt wird, fließt das Saatgut, welches aus dem Messsystem in den Behälter der Pflanzeinheit geflossen ist, in das Gehäuse des Messsystems zurück.

Die Pflanzeinheit ist an einen Rahmen gekoppelt, der einen Hauptsaatgutbehälter trägt. Der Hauptsaatgutbehälter ist zweckmäßigerweise über eine Verbindung, insbesondere ein flexibles Rohr, mit der Pflanzeinheit saatgutleitend verbunden. Er kann das Saatgut der Pflanzeinheit durch die Schwerkraft oder mit Unterstützung eines Luftstroms durch die Verbindung zuführen. Das Saatgut aus der Verbindung strömt durch den Behälter der Pflanzeinheit zum Messsystem. Die Leitwand ist im Behälter derart angeordnet, dass das den Behälter durchströmende Saatgut unterhalb einer konkaven Oberfläche der Leitwand strömt. Wenn die Pflanzeinheit auf ihre Nase in ihre vertikale Transportposition geschwenkt wird, wird das Saatgut aus dem Saatguthügel durch die konvexe Oberfläche der Leitwand in den Behälter der Pflanzeinheit geleitet, wenn das Saatgut über die Oberseite der Leitwand in den Behälter zurückfließt. Wenn die Pflanzeinheit in ihre horizontale Arbeitsposition zurückgedreht wird, fließt das aus dem Messsystem stammende Saatgut, das an der Oberseite der Leitwand festgehalten wird, in das Messsystem zurück, bevor Saatgut anfängt, vom Einlass unterhalb der Leitwand in das Messsystem zu fließen.

Der Behälter der Pflanzeinheit ist in der Regel aus Kunststoff hergestellt und auf das Messsystem genietet. Er ist mit einer offenen Oberseite ausgestattet, die einen abnehmbaren Deckel zum Entfernen des Saatguts aus dem Behälter der Pflanzeinheit und zum Reinigen aufweist.

In den Zeichnungen ist ein nachfolgend näher beschriebenes Ausführungsbeispiel der Erfindung dargestellt. Es zeigt:
- Fig. 1: eine Seitenansicht einer Sämaschine mit den Pflanzeinheiten in ihren horizontalen Arbeitspositionen,
- Fig. 2: eine Seitenansicht einer Sämaschine mit den Pflanzeinheiten in ihrer vertikalen Transportposition,
- Fig. 3: eine vergrößerte Seitenansicht des Messsystems und des Behälters der Pflanzeinheit,
- Fig. 4: ein perspektivischer teilweiser Querschnitt des Messsystems und des Behälters der Pflanzeinheit, und
- Fig. 5: eine Seitenansicht des Gehäuseelements des Messsystems der Pflanzeinheit, in der die Bürstenzusammenbauten illustriert sind.

Die Sämaschine 10 umfasst einen Rahmen 12, einen Hauptsaatgutbehälter 14, eine Pflanzeinheit 16 und ein flexibles Rohr 18. Im Hauptsaatgutbehälter 14 enthaltenes Saatgut wird durch die Schwerkraft durch das flexible Rohr 18 in die Pflanzeinheit 16 übertragen. Die Pflanzeinheit 16 umfasst einen Pflanzeinheitrahmen 20, an dem ein Behälter 22 der Pflanzeinheit 16 und ein Vakuummesssystem 24 angebracht sind. Obwohl nicht dargestellt, würde auch ein Furchenöffner mit Tiefeneinstellrädern an dem Pflanzeinheitrahmen 20 befestigt sein, wie auch ein Saatgutrohr und Schließräder. Der Furchenöffner würde verwendet, eine Pflanzfurche zu bilden. Das Saatgutrohr würde abgemessenes Saatgut von dem Messsystem 24 in die Pflanzfurche leiten. Die Schließräder würden die Pflanzfurche schließen und dass Saatgut in der Furche einschließen. Der Furchenöffner mit Tiefeneinstellrädern, das Saatgutrohr und die Schließräder sind konventionell und im Stand der Technik gut bekannt.

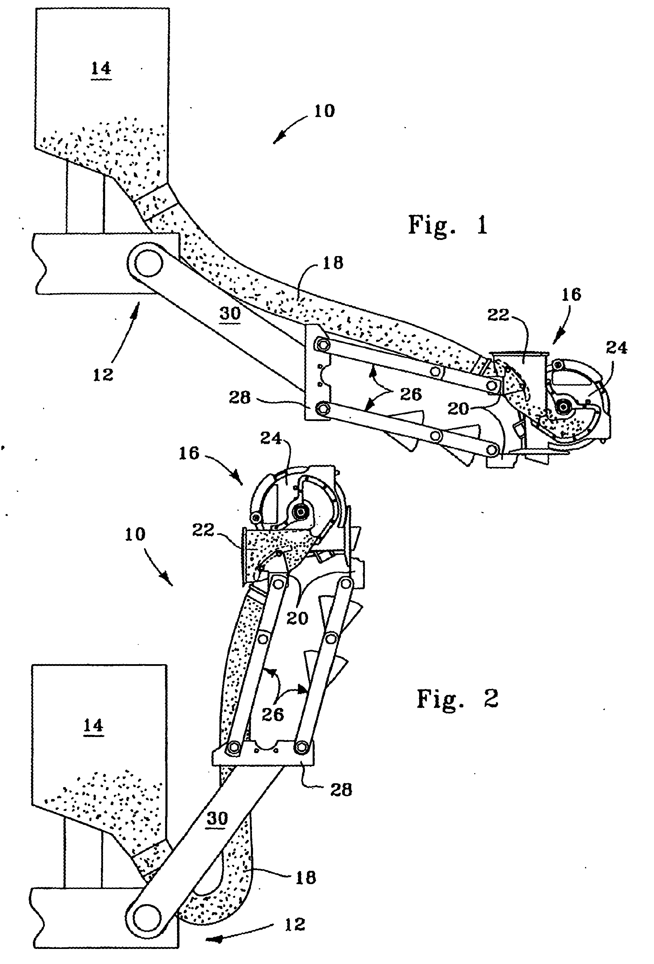

Die Pflanzeinheit 16 befindet sich, wie sie in Figur 1 dargestellt ist, in ihrer horizontalen Arbeitsposition. Um die Größe des Pakets beim Transport zu vermindern, kann die Pflanzeinheit 16 in ihre vertikale Transportposition verschwenkt werden, wie in Figur 2 dargestellt. Die Pflanzeinheit 16 ist außerdem mit einem Parallelogrammgestänge 26 ausgestattet, das sich zwischen dem Pflanzeinheitrahmen 20 und einer Befestigungsplatte 28 erstreckt. Die Befestigungsplatte 28 ist am Schwenkmechanismus 30 des Rahmens 12 befestigt. Das Parallelogrammgestänge 26 erlaubt der Pflanzeinheit 16, dem Boden zu folgen, wenn sie sich in ihrer horizontalen Arbeitsposition befindet.

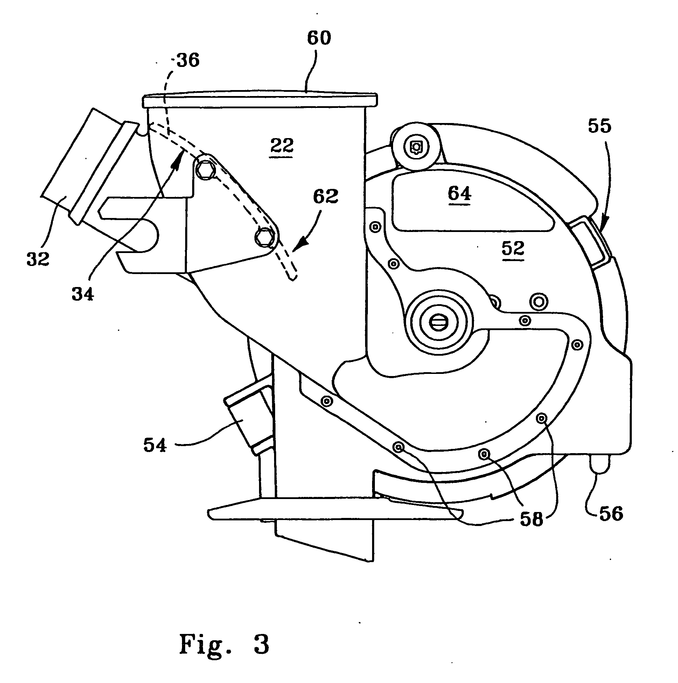

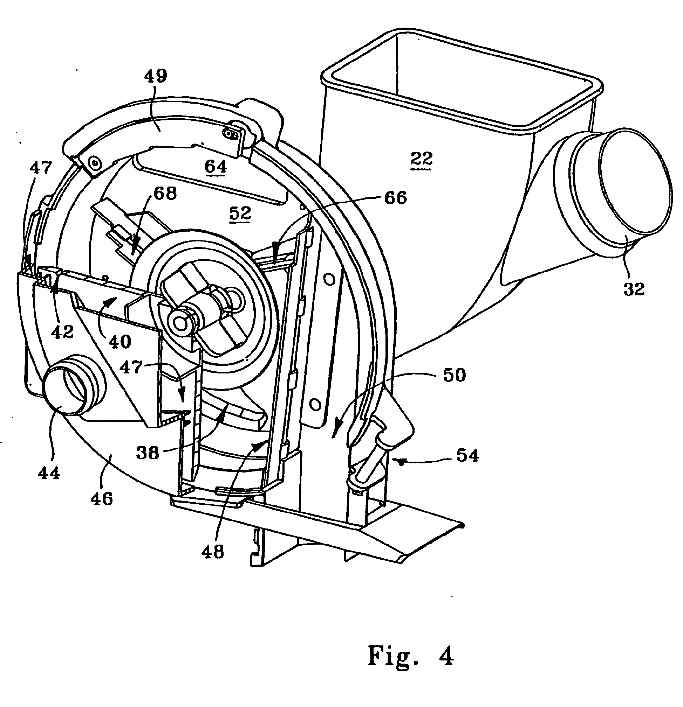

Die erfinderischen Merkmale der Pflanzeinheit 16 sind am Besten in den Figuren 3 und 4 illustriert. Saatgut vom Hauptbehälter 14 strömt durch das flexible Rohr 18 zum Behälter 22 der Pflanzeinheit 16. Der Behälter 22 ist mit einem Einlass 32 ausgestattet, der mit dem flexiblen Rohr 18 gekoppelt ist. Das Saatgut strömt unterhalb der konkaven Oberfläche 34 einer Leitwand 36 und durch den Eingangsdurchlass 38 in das Messsystem 24. Das Saatgut formt einen Saatguthügel an der Säscheibe 40. Die Säscheibe 40 ist eine konventionelle Vakuumsäscheibe, die mit einer Reihe in Umfangsrichtung beabstandeter Öffnungen 42 ausgestattet ist. Jede Öffnung 42 entspricht einer individuellen Saatgutzelle an der Säscheibe 40. Die Saatgutzellen kommen mit dem im Saatguthügel angeordneten Saatgut in Berührung.

Ein Vakuum oder Unterdruck wird auf die Seite der Säscheibe 40 angelegt, die dem Saatguthügel gegenüberliegt. Die Vakuumquelle ist typischerweise ein durch einen hydraulischen Motor angetriebener Ventilator, der das Vakuum durch Schläuche überträgt, die mit einem Fitting 44 verbunden sind, das am Vakuumgehäuseelement 46 des Messsystems 24 angeordnet ist. Eine Dichtung 47 ist am Vakuumgehäuseelement 46 befestigt. Die Dichtung 47 berührt die Säscheibe 40 und bildet mit ihr eine luftdichte Dichtung. Wie in Figur 4 erkennbar, dreht sich die Säscheibe 40 in der Uhrzeigerrichtung. Das Vakuum zieht Saatgut in die Saatgutzellen. Während sich die Saatgutzellen durch den Saatguthügel drehen, lagert sich Saatgut in den Saatgutzellen an und wird aus dem Saatguthügel nach oben gedreht. Ein Zwillingseliminator 49 zum Herausschlagen überschüssigen Saatguts aus den Saatgutzellen ist an der Oberseite des Messsystems angeordnet. Die einzelne Saatgutkörner enthaltenden Saatgutzellen werden dann entlang einer Bürste 48 in die Abgabezone 50 gedreht. In der Abgabezone 50 wird das Vakuum durch die Anordnung der luftdichten Dichtung 47 von den Öffnungen 42 abgesperrt. Das Beenden des Vakuums gibt das Saatgut von der Säscheibe 40 frei. Das Saatgut bewegt sich durch die Abgabezone 50 durch die Schwerkraft nach unten aus dem Messsystem 24 hinaus in ein Saatgutrohr und in die Pflanzfurche.

Das Vakuumgehäuseelement 46 ist durch ein Scharnier 54 schwenkbar an das Gehäuseelement 52 des Behälters 22 der Pflanzeinheit 16 gekoppelt. Ein Riegel 55 ist dem Scharnier 54 gegenüber angeordnet und verriegelt das Vakuumgehäuseelement 46 mit dem Gehäuseelement 52 des Behälters 22. Das Gehäuseelement 52 des Behälters 22 der Pflanzeinheit 16 ist mit einem Ortungsknopf 56 ausgestattet. Der Ortungsknopf 56 erleichtert das Anbringen des Messsystems 24 und des Behälters 22 am Pflanzeinheitrahmen 20 der Pflanzeinheit 16.

Der Behälter 22 ist aus Kunststoff und durch Befestigungselemente 58 am Behältergehäuseelement 52 angebracht. Der Behälter 22 hat eine offene Oberseite, die durch einen abnehmbaren Deckel 60 geschlossen wird. Wenn die Pflanzeinheit 16 aus ihrer horizontalen Arbeitsposition in ihre vertikale Transportposition geschwenkt wird, fließt Saatgut im Messsystem 24 in Richtung auf das flexible Rohr 18. Saatgut aus dem Messsystem 24 fließt über die konvexe Oberfläche 62 der Leitwand 36 und wird im Behälter 22 der Pflanzeinheit 16 gehalten, wie in Figur 2 gezeigt.

Die Oberseite des Behältergehäuseelements 52 ist mit einer Öffnung 64 ausgestattet, durch die vom mit Vakuum betriebenen Messsystem 24 Luft gezogen wird. Diese Öffnung 64 ist typischerweise mit einem klaren Kunststofffenster ausgestattet, das Lamellen aufweist. Das klare Kunststofffenster stellt ein Inspektionsfenster für das Messsystem bereit. Das mit Lamellen versehene Fenster ist nicht in den Zeichnungen illustriert.

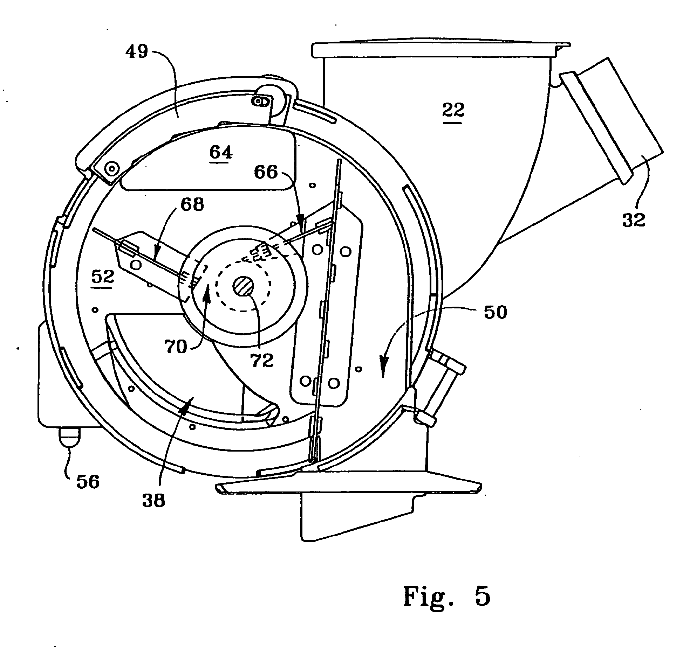

Das Messsystem 24 ist mit zwei zusätzlichen Bürstenzusammenbauten 66 und 68 ausgestattet, die zwischen dem Saatguthügel und der Öffnung 64 angeordnet sind. Die erste Bürste 66, wie in den Figuren 4 und 5 gezeigt, erstreckt sich von der 2-Uhr-Position nach unten und radial nach innen bis zu einer Stelle oberhalb der Antriebswelle 72 des Messsystems 24. Die zweite Bürste 68 erstreckt sich von der 10-Uhr-Position radial nach innen bis zu einer von der Antriebswelle 72 des Messsystems 24 beabstandeten Stelle. Eine Saatgutrücklauflücke 70 ist zwischen der Antriebswelle 72 und der zweiten Bürste 68 geformt. Die Saatgutrücklauflücke 70 wird verwendet, überschüssiges Saatgut, das durch den Zwillingseliminator 49 aus den Saatgutzellen freigesetzt wurde, zum Saatguthügel zurückzuführen. Als solche erstrecken sich die beiden Bürstenzusammenbauten 66 und 68 von den äußeren Bereichen der Säscheibe 40 in einem V nach unten und innen, wobei die Saatgutrücklauflücke 70 an der Spitze gebildet ist.

Nach einem Sävorgang wird die Vakuumquelle abgeschaltet, wodurch Saatgut von der Säscheibe 40 freigegeben wird. Saatgut, das oberhalb der ersten und zweiten Bürste 66 und 68 angeordnet ist, wird durch die Bürsten 66 und 68 zur Saatgutrücklauflücke 70 geleitet.

Wenn die Pflanzeinheit 16 aus ihrer horizontalen Arbeitsposition in ihre vertikale Transportposition geschwenkt wird, strömt das meiste Saatgut aus dem Saatguthügel durch den Durchlass 38 und wird durch die Leitwand 36 in den Behälter 22 der Pflanzeinheit 16 abgelenkt. Ein Teil des Saatguts verbleibt jedoch im Messsystem 24 und bildet einen kleineren Saatguthügel an der Bürste 48 und der ersten Bürste 66, s. Figur 2. Die zweite Bürste 68 verhindert, dass Saatgut aus diesem kleineren Saatguthügel aus dem Saatguthügel heraushüpft und in die Abgabezone 50 des Messsystems 24 fällt.

In einer anderen Ausführungsform könnte ein mechanisches Messsystem oder ein pneumatisches, mit Überdruck arbeitendes Messsystem an Stelle des oben beschriebenen, mit Unterdruck arbeitenden Messsystems 24 verwendet werden. Außerdem kann das Saatgut den individuellen Behältern 22 der Pflanzeinheiten 16 durch ein pneumatisches System auf Anfrage zugeführt werden, anstelle durch das mit Schwerkraft arbeitende Zuführsystem, das in der obigen Beschreibung offenbart ist.

## Patentansprüche

1. Sämaschine (10) mit einem Rahmen (12) und einer schwenkbar am Rahmen (12) befestigten Pflanzeinheit (16), die eine horizontale Arbeitsposition und eine vertikale Transportposition hat und mit einem Behälter (22) und einem Messsystem (24) zum Abmessen von Saatgut ausgestattet ist, wobei am Rahmen (12) ein Hauptsaatgutbehälter (14) befestigt ist und zwischen dem Hauptsaatgutbehälter (14) und dem Behälter (22) der Pflanzeinheit (16) eine Verbindung zum Überführen von Saatgut aus dem Hauptsaatgutbehälter (14) zum Behälter (22) der Pflanzeinheit (22) angeordnet ist, **dadurch gekennzeichnet, dass** im Behälter (22) der Pflanzeinheit (16) eine sich quer über den Behälter (22) der Pflanzeinheit (16) erstreckende Leitwand (36) vorhanden ist, die das Saatgut aus dem Messsystem (24) in den Behälter (22) der Pflanzeinheit (16) leitet und darin festhält, wenn die Pflanzeinheit (16) aus ihrer horizontalen Arbeitsposition in ihre vertikale Transportposition geschwenkt wird, dass die Leitwand (36) derart abgewinkelt ist, dass im Behälter der Pflanzeinheit (16) enthaltenes Saatgut in das Messsystem (24) zurückgeführt wird, wenn die Pflanzeinheit aus ihrer vertikalen Transportposition in ihre horizontale Arbeitsposition geschwenkt wird, und dass die Leitwand (36) eine konvexe Oberfläche (62) hat, um das Saatgut im Behälter (22) zu leiten und zu halten, und eine konkave Oberfläche (34), unterhalb der Saatgut vom Hauptbehälter (14) zum Messsystem (24) strömt.

2. Sämaschine (10) nach Anspruch 1, **dadurch gekennzeichnet, dass** Saatgut im Messsystem (24) einen Saatguthügel bildet, wenn sich die Pflanzeinheit in ihrer horizontalen Arbeitsposition befindet, und dass die Leitwand (36) das Saatgut aus dem Saatguthügel in den Behälter (22) leitet und darin festhält, wenn die Pflanzeinheit (16) aus ihrer horizontalen Arbeitsposition in ihre vertikale Transportposition geschwenkt wird.

3. Sämaschine (10) nach einem der Ansprüche 1 oder 2, **dadurch gekennzeichnet, dass** die Verbindung zwischen dem Hauptsaatgutbehälter (14) und dem Messsystem ein flexibles Rohr (18) ist.

4. Sämaschine (10) nach einem der Ansprüche 1 bis 3, **dadurch gekennzeichnet, dass** der Hauptbehälter (14) oberhalb der Pflanzeinheit (16) angeordnet ist, wenn sich die Pflanzeinheit (16) in ihrer horizontalen Arbeitsposition befindet, so dass Saatgut durch Schwerkraft durch die Verbindung vom Hauptbehälter (14) zur Pflanzeinheit (16) gefördert wird.

5. Sämaschine (10) nach einem der Ansprüche 1 bis 4, **dadurch gekennzeichnet, dass** der Behälter (22) der Pflanzeinheit (16) eine offene Oberseite aufweist, die durch einen abnehmbaren Deckel (60) abgedeckt ist.

6. Sämaschine (10) nach einem der Ansprüche 1 bis 5, **dadurch gekennzeichnet, dass** das Messsystem (24) ein Vakuummesssystem ist.

7. Sämaschine (10) nach einem der Ansprüche 1 bis 6, **dadurch gekennzeichnet, dass** die Pflanzeinheit (16) durch ein Gestänge, insbesondere ein Parallelogrammgestänge (26), mit dem Rahmen (12) gekoppelt ist, welches der Pflanzeinheit (16) erlaubt, dem Boden zu folgen, wenn sie sich in der horizontalen Arbeitsposition befindet.

## Claims

1. Sowing machine (10) with a frame (12) and a planting unit (16) fastened to the frame (12) to be able to pivot, said planting unit having a horizontal working position and a vertical transport position and being equipped with a hopper (22) and a metering system (24) for metering seed material, wherein a main seed hopper (14) is fastened to the frame (12) and between the main seed hopper (14) and the hopper (22) of the planting unit (16) a connection is arranged for the transfer of seed material from the main hopper (14) to the hopper (22) of the planting unit (16), **characterised in that** provided in the hopper (22) of the planting unit (16) is a baffle (36), which extends transversely over the hopper (22) of the planting unit (16), directs the seed material from the metering system (24) into the hopper (22) of the planting unit (16) and holds it therein when the planting unit (16) is pivoted out of its horizontal working position into its vertical transport position, that the baffle (36) is angled in such a way that any seed material contained in the hopper of the planting unit (16) is directed back into the metering system (24) when the planting unit is pivoted out of its vertical transport position into its horizontal working position, and that the baffle (36) has a convex surface (62) in order to direct and hold the seed material in the hopper (22) and a concave surface (34), beneath which seed material flows from the main hopper (14) to the metering system (24).

2. Sowing machine (10) according to Claim 1, **characterised in that** the seed material forms a mound in the metering system (24) when the planting unit is located in its horizontal working position, and that the baffle (36) directs the seed material from the seed material mound into the hopper (22) and holds it therein when the planting unit (16) is pivoted out of its horizontal working position into its vertical transport position.

3. Sowing machine (10) according to one of Claims 1 or 2, **characterised in that** the connection between the main seed hopper (14) and the metering system is a flexible tube (18).

4. Sowing machine (10) according to one of Claims 1 to 3, **characterised in that** the main hopper (14) is arranged above the planting unit (16) when the planting unit (16) is located in its horizontal working position, so that seed material is transported by gravity through the connection from the main hopper (14) to the planting unit (16).

5. Sowing machine (10) according to one of Claims 1 to 4, **characterised in that** the hopper (22) of the planting unit (16) has an open top, which is covered by a detachable cover (60).

6. Sowing machine (10) according to one of Claims 1 to 5, **characterised in that** the metering system (24) is a vacuum metering system.

7. Sowing machine (10) according to one of Claims 1 to 6, **characterised in that** the planting unit (16) is coupled to the frame (12) through a linkage, preferably a four-bar linkage (26), which allows the planting unit (16) to follow the ground when it is located in the horizontal working position.

## Revendications

1. Semoir (10) comportant un bâti (12) et une unité d'ensemencement (16) fixée pivotante contre le bâti (12), laquelle possède une position de travail horizontale et une position de transport verticale et est munie d'un réservoir (22) et d'un système de dosage (24) destiné à doser les semences, un réservoir à semences principal (14) étant fixé sur le bâti (12) et un conduit étant agencé entre le réservoir à semences principal (14) et le réservoir (22) de l'unité d'ensemencement (16) afin de transférer les semences hors du réservoir à semences principal (14) vers le réservoir (22) de l'unité d'ensemencement (16), **caractérisé en ce que** dans le réservoir (22) de l'unité d'ensemencement (16) il est prévu une paroi de guidage (36), qui s'étend transversalement à travers le réservoir (22) de l'unité d'ensemencement (16) et qui guide les semences hors du système de dosage (24) dans le réservoir (22) de l'unité d'ensemencement (16) et les retient dans celui-ci, lorsque l'unité d'ensemencement (16) est amenée par pivotement hors de sa position de travail horizontale dans sa position de transport verticale, **en ce que** la paroi de guidage (36) est coudée de telle sorte que les semences contenues dans le réservoir de l'unité d'ensemencement (16) sont ramenées dans le système de dosage (24) lorsque l'unité d'ensemencement (16) est amenée par pivotement hors de sa position de transport verticale dans sa position de travail horizontale, et **en ce que** la paroi de guidage (36) a une surface convexe (62) pour guider les semences dans le réservoir (22) et les retenir dans celui-ci, et une surface concave (34), en dessous de laquelle les semences affluent du réservoir principal (14) vers le système de dosage (24).

2. Semoir (10) selon la revendication 1, **caractérisé en ce que** les semences dans le système de dosage (24) forment un monticule lorsque l'unité d'ensemencement (16) est dans sa position de travail horizontale, et **en ce que** la paroi de guidage (36) guide les semences hors du monticule de semences vers l'intérieur du réservoir (22) et les retient dans celui-ci lorsque l'unité d'ensemencement (16) est amenée par pivotement hors de sa position de travail horizontale dans sa position de transport verticale.

3. Semoir (10) selon la revendication 1 ou 2, **caractérisé en ce que** le conduit entre le réservoir à semences principal (14) et le système de dosage (24) est un tube flexible (18).

4. Semoir (10) selon l'une quelconque des revendications 1 à 3, **caractérisé en ce que** le réservoir principal (14) est disposé au-dessus de l'unité d'ensemencement (16) lorsque l'unité d'ensemencement (16) est dans sa position de travail horizontale, de telle sorte que les semences sont transportées, sous l'effet de la pesanteur, à travers le conduit depuis le réservoir principal (14) vers l'unité d'ensemencement (16).

5. Semoir (10) selon l'une quelconque des revendications 1 à 4, **caractérisé en ce que** le réservoir (22) de l'unité d'ensemencement (16) comporte une face supérieure ouverte qui est recouverte par un couvercle (60) amovible.

6. Semoir (10) selon l'une quelconque des revendications 1 à 5, **caractérisé en ce que** le système de dosage (24) est un système sous vide.

7. Semoir (10) selon l'une quelconque des revendications 1 à 6, **caractérisé en ce que** l'unité d'ensemencement (16) est couplée au bâti (12) par l'intermédiaire d'un ensemble de tiges, en particulier des tiges assemblées en parallélogramme (26), qui permettent à l'unité d'ensemencement (16) de suivre le sol lorsqu'elle est dans sa position de travail horizontale.
